**Europäisches Patentamt**

**European Patent Office**

**Office européen des brevets**

(19)

(11) Publication number: **0 118 638**

**A1**

(12)  **EUROPEAN PATENT APPLICATION**

(21) Application number: **83306351.4**

(22) Date of filing: **19.10.83**

(51) Int. Cl.³: **B 32 B 7/02**

(30) Priority: **07.02.83 GB 8303293**

(43) Date of publication of application:
**19.09.84 Bulletin 84/38**

(84) Designated Contracting States:
**AT BE CH DE FR IT LI LU NL SE**

(71) Applicant: **Peter Leonard Campbell, Ian Hunter Reith, William Frederick Hill, George Roland Hill, Emyr Gwyn Roberts, Trading as CAMPBELL,**
**REITH AND HILL Hampton House 62 Bramhall Lane South**
**Bramhall Stockport SK7 2DU(GB)**

(71) Applicant: **Engineering Design & Model (Manchester) Limited**
**Baxter Street Hollingwood**
**Oldham Lancashire OL8 4RG(GB)**

(72) Inventor: **Hill, George Roland**
**14 Parnall Avenue**
**Stockport(GB)**

(72) Inventor: **Yule, William Frederick**
**50 Patch Lane Bramhall**
**Stockport(GB)**

(74) Representative: **Low, Peter John et al,**
**WILSON, GUNN & ELLIS 41 Royal Exchange**
**Manchester, M2 7BD(GB)**

(54) **Semi-transparent panel of plastics material.**

(57) Transparent plastics panels where the visibility in one direction is limited by a pattern of opaque dots on the surface thereof have a limited life because once the plastic is scratched it cannot be repolished without removing the opaque pattern as well.

A panel in which an opaque pattern (14) is disposed intermediate the external panel surfaces (10, 12) can be reground and polished leaving the pattern in place.

FIG.1

TRANSPARENT PANEL

This invention relates to transparent panels and in particular panels of the kind which from one side permit objects on the other side to be seen but from the other side restrict the visibility of objects on said one side.

Panels of the kind with which the invention is concerned find particular use in the constructions of, for example, squash courts which permit spectators to view the players while the players are not distracted by the spectators. Such panels have in the past been made of glass or plastics material with a pattern of markings such as dots or lines on one side thereof. It might be thought that such panels may equally well be made of transparent plastics material in place of glass. However, unlike glass, the surface of plastics can be easily scratched, thus considerably reducing the quality of image transmitted therethrough. If such a plastics panel is repolished to remove the scratches the pattern of markings is damaged and the panel no longer functions as intended.

The present invention has been made from a consideration of this problem and has for its object the provision of panels which can be repeatedly repolished without removing the pattern.

According to the invention there is provided a transparent panel of plastics material, said panel having a pattern of opaque or coloured material disposed intermediate the external surfaces of the panel so that an object on one side of the panel is not readily visible from the other side but so that an object on said other side may be seen from either side of the panel provided that there is a higher level of illumination on said other side than on said one side.

In one embodiment of the invention the panel comprises at least two layers of plastics with the pattern of opaque material located at the interface between two layers. Preferably a pattern of opaque dots or lines is printed on the surface of one layer. The pattern is preferably regular and occupies from 5 to 50% of the panel surface with, for example, from 1 to 25 dots or lines per linear centimetre. An opaque printing ink, paint or marking fluid may be used and the pattern applied by litho, screen printing or transfer methods. The printed surface is then covered with a layer or film of plastics material which is preferably the same as the main body of the panel.

The layers are preferably secured together, for example, by bonding, self-adhesive laminating, or ultrasonic welding.

In a further embodiment of the invention, one or more gaps may exist between layers or films of plastics material, so that the panel is similar to double glazing.

In a further embodiment of the invention, the opaque pattern may be formed by a perforated membrane, an open weave fabric or other material which allows light to pass through a proportion of its surface. The material is preferably secured between the two layers, for example, by bonding or self-adhesive laminating.

In a further embodiment of the invention, the opaque pattern may be of one colour when viewed on one side of the panel and a different colour when viewed on the other side of the panel. For example, if it is desired to televise a game of squash on the said other side of the panel, the pattern on the said other side of the panel should be white or light colour, whereas the pattern on the said one side, being the same side as a television camera, should be black or other dark colour, to obtain the best possible television image. There are many possible ways of producing the panel with an opaque pattern that appears one colour from one side and a different colour from the other side, including the following:

(a)   Litho, screen, or other printing process, including overprinting a pattern in one colour by the same pattern in another colour, achieving as exact registration of the two patterns as possible.   The dots, lines or other elements of a pattern may be printed larger in one colour than the other colour, to ensure that the said other colour does not overlap the said one colour.

(b)   The application of an opaque pattern of one colour by transfer method and then superimposing the same pattern on to a different colour by transfer methods, achieving as exact registration of the two patterns as possible.

(c)   The application of a layer of one colour and applying the pattern in a different colour by printing, transfer method or in the form of a perforated membrane, or open weave fabric.   A solvent or other means of removing the first layer to which the pattern ink or other material is resistant and remains intact is then applied. In this way, the pattern is produced with the two colours exactly superimposed and with no lack of registration.   If a layer of plastic material is to be secured to the opaque pattern surface, both materials should be resistant to any bonding agent, self-adhesive or other adhesive used.   Alternatively, an additional transparent layer may be applied, for example, a lacquer material, which will protect the opaque pattern from the bonding agent or adhesive but will allow an adequate bond to be achieved.  This protecting layer may be a continuous layer or may be of a pattern which covers the opaque pattern.  To deal with any lack of registration, the protecting pattern layer may be such that it slightly overlaps the desired opaque pattern.  The protecting pattern layer will still allow bonding to take place between two sheets of plastics material, even if the protecting material is not suited to bonding, the bonding agent functioning in the area of the surface remaining uncovered by the protective pattern.

(d)  By using a Letterpress printing technique, the impression block being suitably guided to achieve as near as possible exact registration of the two colours.

(e)  By a stencil technique, to enable the exact registration of two layers of colour to be obtained. The stencil is removed after application of the two layers of ink or other marking fluid.  The stencil may be a perforated sheet or film material or open weave fabric, with or without removable adhesive, or may be a strippable lacquer, printed in a suitable pattern onto the panel.

(f)   By bonding a layer of plastic with the pattern perforated in it to the main body of the panel. The perforations may be formed by laser or mechanical or chemical means.   One layer of ink, paint or other marking fluid is applied by spraying or other suitable method.   A second layer of ink, paint marking fluid or other coloured material, which is preferably the same material as the main body of the panel and which preferably fills the perforations is then applied. The excess material is cleaned or polished from the surface of the perforated sheet.   The panel thus produced can be used without a protecting sheet of clear plastic but if desired a protecting sheet of clear plastic may be placed over the pattern surface and preferably secured to the patterned surface for example by bonding or self-adhesive lamination.

(g)   By using a sheet of plastic material with a deformed surface having a pattern of recesses thereon, for example

(i)    Rolling or otherwise applying ink, paint or marking fluid in two layers of different colour onto a deformed sheet, such as "Perspex Pyramid", manufactured by Imperial Chemical Industries PLC which sheet is provided with a plurality of pyramid shaped projections on the surface thereof. The opaque covering is applied only to the crests of the pyramids so that the bases remain clear. For the required optical properties the surface must be covered by a clear pane of plastics which may be for example cast thereon or preformed and bonded thereto.

(ii) Spraying or otherwise applying one colour of ink or paint or marking fluid over the whole surface of a deformed sheet, such as "Perspex Diamond", manufactured by Imperial Chemical Industries PLC. Filling the recesses with a material of another colour, preferably of similar hardness to the parent material or the parent material itself. Grinding and polishing as necessary, parallel to the plane surface of the deformed sheet material, until the required pattern is obtained. The pattern thus produced can be repeatedly polished without removing the pattern. The pattern can be protected by a sheet of clear plastic, preferably secured to it by bonding.

(iii) Spraying or otherwise applying two different colour coats of ink, paint or other marking fluid. Grinding and polishing as necessary the surface, to achieve the desired pattern. The pattern can be protected by a sheet of clear plastic preferably bonded to the first layer.

(iv)   Casting a deformed sheet such that the required pattern is recessed in the surface. Spraying or otherwise applying one colour of ink or paint or marking fluid over the whole surface of the deformed sheet. Filling the recesses with a material of another colour and cleaning of the excess material over the area which is to be transparent. The pattern can be protected by a sheet of clear plastic preferably bonded to the polished surface.

(v)   Engraving, scribing or otherwise forming a pattern of straight or curved lines on the surface of a sheet of clear plastics. Spraying or otherwise applying two different colour coats of ink, paint or other marking fluid. Cleaning excess material off area to be transparent. The pattern can be protected by a sheet of clear plastic, preferably bonded to the first layer.

(h) Applying ink, paint, coloured adhesive or other marking fluid in the required pattern by litho, screen printing or other process in one colour, then applying another colour in the form of powder when the pattern material is still in a wet or tacky state. Excess powder is then blown away to achieve the pattern in two superimposed colours with exact registration. For example, lamp black may be applied to white ink or titanium dioxide powder applied to black ink. Heat or fixative may be applied before bonding a protective layer of plastic over the pattern.

(i) By using a perforated membrane, open weave fabric or other material which is transparent for a proportion of its area. The material may be of one desired colour, and an ink, dye, paint or other marking fluid applied to one side thereof. Alternatively, ink, dye, paint or other marking fluid of different colours may be applied to opposite sides of the material. The material thus produced is bonded between two layers of plastic.

(j) By applying an opaque pattern of two different colours on two separate sheets of plastic, the two patterned surfaces being placed together and preferably bonded together, achieving as accurate as possible superimposition of one colour upon the other colour.

(k) By applying an opaque pattern to a thin membrane, for example by any printing process used for paper. The membrane may be of the parent plastic material or other material that can be bonded on both sides to the plastic material. Alternatively, the membrane may be of a material which can be removed by solvent or other technique after application to a sheet of plastic, the opaque pattern remaining in place. The membrane may form the protective layer.

(l) By applying the pattern in two layers of different colour of ink, paint or other marking fluid by computer controlled graphics techniques.

(m) By applying the pattern in one colour of ink, paint or other marking fluid by screen printing or other printing process and applying the second colour or ink, paint or other marking fluid by hand.

(n) By etching the pattern into the surface of a sheet of plastic by laser, chemical, sand blasting or other means. The etched pattern should be sufficiently deep to accept two layers of different colour of ink, paint or other marking material, applied by spray or other technique. Excess material may be cleaned or polished from the surface of the sheet, leaving the pattern in two exactly superimposed colours. Alternatively a thin film of masking material may be placed over the sheet before etching, which is also etched to the required pattern and is removed with the unwanted coloured materials after their application.  A protecting sheet of plastic may then be bonded to the patterned surface.

(o) By using an electrostatic process in which the pattern is first screen printed or otherwise applied to the plastic sheet in one colour.  The pattern is then electrostatically charged to attract a fine dust of a second colour to exactly superimpose the pattern.  This is then fixed by heat or chemical process.

(p) By applying two layers of different coloured ink, paint or other marking fluid and mechanically removing these layers, for example in a tartan pattern, leaving the required percentage of opaque pattern.  A protective layer of plastic is applied over first layer and preferably bonded thereto.

(q) Applying a pattern of one material and applying two layers of different coloured ink, paint or other marking fluid to cover the gaps in the pattern or over the whole surface.  The first material is removed by a solvent, heat or other process to which the ink, paint or other marking fluid is resistant.

In one such process the application of water causes an expansive reaction in the first material which causes it to be removed with the coloured materials immediately on top of it, leaving a residual pattern of the coloured materials.

The first material may be applied by screen printing or other printing process or may be produced phtographically by applying a layer of light sensitive material, placing a pattern original on a transparent film thereover, exposing to light, fixing the exposed areas of light sensitive material and removing the unexposed areas with suitable chemicals.

Alternatively the two layers of coloured material can be applied first and another material can be formed in a pattern thereover, either printed or photographically applied as already described. The coloured materials may then be removed by a solvent from the areas between the pattern. The pattern material may then be removed by another solvent, heat, expansive or other process.

A protective layer of plastics may be applied and preferably bonded thereto.

(r)    Embossing a pattern in one colour into the surface of the plastic and applying a second colour of ink, paint or other marking fluid into the recessed pattern and cleaning any excess from the surface.   A protective layer of plastic, may be applied to the first layer and preferably bonded thereto.

(s)    Photographically producing onto a sheet or film of plastics material a white-on-black dot pattern using two layers of light sensitive emulsion, one resulting in black colour, the other white.   The photographically patterned sheet or film is bonded or otherwise laminated to one or more sheets or films of plastics material such that the pattern is protected by a thickness of plastics material.

In the embodiments of the invention in which the pattern is protected by a layer of clear plastic material, the invention is not restricted to a panel made of two layers;  any number of layers may be used. It is sometimes desirable, in order that the invention shall operate as intended that the opaque markings are disposed in the panel closer to the surface of said other side than to the surface of said one side.

- 13 -

0118638

In the case where two layers are employed, therefore, it is preferred that one layer is thicker than the other. However, the same result can be achieved by combining three or more layers together and disposing the opaque markings at an interface between two layers that is located closer to one side of the final panel than to the other side. For example, it may be convenient to transfer the opaque markings onto a thin layer of plastics which is then covered with a further thin layer. The two layers can then be combined with another thicker layer (which itself may be composed of a number of layers) to make the panel of the invention.

The panel or at least part thereof is preferably made of acrylic of polycarbonate material; particularly preferred being an acrylic material sold as "Perspex" a plastics material manufactured by Imperial Chemical Industries PLC. The overall thickness of the panel and the location therein of the opaque pattern is chosen having regard, inter alia to the intended use of the panel. Where the panel is intended for inclusion in the wall of a structure such as a squash court it must be sufficiently thick so as to be substantially rigid and of adequate strength. With acrylic plastics material a total panel thickness of from 15 to 30 mm, preferably 20 mm, is suitable for a squash court.

The location of the opaque pattern may also be governed by the requirement in certain applications such as a squash court, that it should be as close as possible to the said other side of the final panel consistent with the provision of sufficient material covering the opaque pattern to permit re-polishing of the said other side to remove scratches. Preferably the opaque pattern is covered by a layer having a thickness of from 0.5 to 5.0 mm, the preferred range being from 0.5 to 3.0 mm. A typical preferred panel construction of 23 mm overall thickness comprises a main body of 20 mm thickness and a covering layer of 3 mm thickness.

In the embodiments of the invention in which the pattern is protected by a layer of clear plastic material, the layers are preferably preformed and bonded to each other for example by means of an adhesive. The adhesive should preferably be one which does not impair the optical properties of the panel. The protecting layer can be provided in other ways. For example, it can be cast directly onto the main body of the panel, the opaque pattern having been printed on, formed in or placed over the main body of the panel. Alternatively, the main body of the panel can be cast onto the protective layer, the opaque pattern having been printed on, formed in or placed over the protective layer.

In the embodiments of the invention in which the pattern has a surface coincident with the external surface of a panel or coincident with an internal surface of a layer within a panel or assembly, a plastics layer may be cast onto a pattern which has been printed onto, or a perforated membrane that has been laid on top of, a sheet of glass or other material against which the plastics material is cast.   The pattern is thus cast into the plastics sheet.

The pattern need not necessarily be opaque but may also be translucent or transparent, provided that it is coloured so as to have the necessary optical properties. The pattern may be of any number of different colours.

In another embodiment of the invention, layers need not be bonded together and may incorporate gaps between layers, for example to form double or treble or quadruple glazing.   If a pattern is not on the outside face of either of the outside sheets of such a glazing assembly, the pattern will be protected from damage and the outside surfaces may be repeatedly repolished without affecting the pattern.   Glass layers may also be incorporated into such an assembly and a patterned plastic layer or layers may be added to a glass layer or layers, for example as secondary glazing, any pattern being protected by a thickness of plastic material.

Although the invention has been described with special reference to its application for squash courts, it is to be understood that the panel of the invention can be used in other ways. For example it can be used to form a security screen in say a bank, in order to provide reduced visibility in one direction and good visibility in the other direction, or it can be used to provide privacy in any glazing application or it can be used as a decorative screen.

To illustrate the invention further various embodiments thereof will now be described with reference to the accompanying drawing in which:-

Fig.1 is a transverse section through a part of a panel according to the invention; and

Figs.2 to 5 are sections similar to that of Fig.2 through different embodiments of panel.

In the various embodiments of different panels like parts are given the same reference numerals.

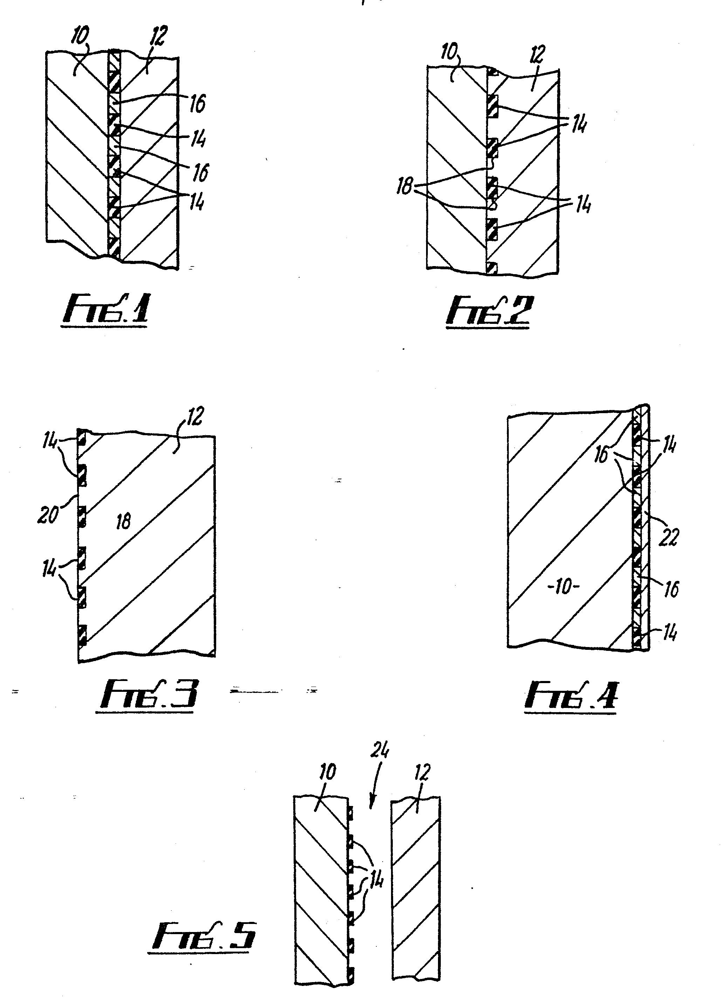

Fig.1 shows an assembly comprising two sheets of transparent plastics 10, 12 having an opaque pattern 14 at the interface thereof. Sheets 10 and 12 are

In the embodiment of Fig.2 the opaque pattern 14 is disposed on the surface of a sheet of plastics (10 as illustrated) against which another layer of plastics (12 as illustrated) is cast.

In the embodiment of Fig.3 the opaque pattern 14 is disposed in recesses 18 formed in the sheet of plastics or the pattern 14 is first formed or laid onto a sheet of glass or other material against which the plastics material is cast.

In the embodiment of Fig.4 the opaque pattern 14 is provided on the surface of plastic sheet 10.   A thin protective cover layer 22 is bonded over the pattern by adhesive 16.   The embodiment of Fig.4 can equally well be made by providing the pattern on layer 22 and then bonding sheet 10 thereto with adhesive.

Fig.5 shows an assembly in which plastic sheets 10 and 12 are separated by an air gap 24 which may be sealed round the edges of the sheets as with sealed double glazing.   The opaque pattern 14 is provided on the inner surface of one of the sheets (10 as illustrated).

Thus the invention overcomes the problems associated with plastics material. If the surface of the panel is scratched it can be repolished without impairing the optical qualities imparted by the opaque pattern.

CLAIMS

1.    A transparent panel of plastics material, characterised in that a pattern of coloured material is disposed intermediate the external surfaces of the panel so that an object on one side of the panel is not readily visible from the other side but so that an object on said other side may be seen from either side of the panel provided that there is a higher level of illumination on said other side than on said one side.

2.    A panel as claimed in Claim 1, wherein the pattern is of opaque material.

3.    A panel as claimed in Claim 1 or Claim 2, wherein the pattern is provided at the interface of two sheets comprised in the panel.

4.    A panel as claimed in any preceding claim, wherein the pattern is provided in recesses in a surface of the said panel.

5.    A panel as claimed in Claim 4, wherein the recesses are provided on an external surface of the panel.

6.    A panel as claimed in Claim 4, wherein the recesses are provided on an internal surface of a sheet comprised in the panel.

7.    A panel as claimed in any preceding claim, wherein the panel comprises a plurality of sheets at least two of which are separated from each other by an air gap.

8. A panel as claimed in Claim 7, wherein the pattern is provided on one of the surfaces adjacent the air gap.

9. A panel as claimed in any preceding claim, wherein the pattern is of a different colour on one side than the other.

10. A panel as claimed in any preceding claim, wherein the pattern comprises a perforated membrane.

11. A panel as claimed in Claim 13, wherein the pattern is provided projecting from a flat surface, a panel is formed on said flat surface so that recesses are formed in said panel in which recesses said pattern is received.

12. A transparent panel substantially as described herein with reference to any one of the Figures of the accompanying drawing.

13. A squash court comprising panels as claimed in any of Claims 1 to 12.

14. A screen affording privacy or security including one or more panels as claimed in any of Claims 1 to 12.

15.   Single or multiple glazing including one or more panels as claimed in any of Claims 1 to 12.

**FIG.1**

**FIG.2**

**FIG.3**

**FIG.4**

**FIG.5**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 451 877  (N. HERSCHMAN) <br> * Whole document * | 1-3 | B 32 B    7/02 |
| A |  | 9,10, 14 | |
| X | FR-A-1 469 605  (L'ACETYLENE DISSOUS DU SUD-EST) <br> * Whole document * | 1-3 | |
| A |  | 7,8,10 ,14,15 | |
| A | GB-A-2 032 417  (WORLD SQUASH AND RACQUETBALL PROMOTIONS LTD.) <br> * Claims 9,10,13 * | 4,5,9, 11,13 | |
| A | GB-A-1 567 625  (HARNEE PTY. LTD.) | | TECHNICAL FIELDS SEARCHED (Int. Cl. ³) <br><br> B 32 B <br> G 02 B    5/00 <br> E 04 C    2/00 <br> E 04 H    3/00 |
| A | EP-A-0 000 446  (LINFORDWARE LTD.) | | |
| E,L | GB-A-2 118 096  (P. CAMPBELL et al.) <br> * Whole document * | 1-15 | |

The present search report has been drawn up for all claims

| Place of search | Date of completion of the search | Examiner |
|---|---|---|
| THE HAGUE | 27-02-1984 | POPINEAU G.J.P. |